# EUROPEAN PATENT APPLICATION

(11) **EP 2 034 640 A1**
(43) Date of publication of application: **11.03.2009**
(21) Application number: 07465005.2
(22) Date of filing: 07.09.2007
(51) Int. Cl.: H04H 60/65, H04H 60/66, H04H 60/46

(54) **Method for scheduling content items and television system with aided content selection**

(71) Applicant: ADVANCED DIGITAL BROADCAST S.A., 1292 Chambesy (CH)
(72) Inventor: Gajda, Marcin, 68-219, Tuplice (PL); Szajna, Tomasz, 66-004, Drzonkow (PL)
(74) Representative: Hudy, Ludwik

(57) **Abstract**

Method and system for scheduling content items accessible to a receiver. The receiver has a processor (120), at least one type of memory (150,160,170) bi-directionally connected to the processor (120), a data receiving block (110), an A/V block (130) for transmitting an output A/V signal, and external interfaces (140), the processor (120) comprises a schedule parameters module (121) for receiving and processing user's parameters input, a schedule search module (122) for searching local or remote schedule databases using parameters defined by the schedule parameters module (121) and a module (123) for adjusting and presenting content items to a user. These three modules (121,122,123) in another embodiment of the system can be separate modules placed outside the processor (120).

## Description

Technical concept presented herein relates to television systems, and more particularly, to a method for scheduling content items accessible to a receiver and television data receiver system such as interactive television program guide systems having aided content selection capabilities, such as programming searching and scheduling.

Presently cable, satellite, Internet protocol (IPTV) and typical broadcast television systems provide a large number of television channels as well as access to video on demand content libraries or the Internet content. Television viewers are accustomed to consulting printed television program schedules in order to find programming information they are possibly interested in. In the recent two decades, interactive electronic television program guides have been developed, which allow television program information to be conveniently displayed on viewer television equipment.

Interactive electronic television program guides, shortly program guides, typically provide a browsing system for accessing program listings of all channels available in the received television signals. Some program guides include features for allowing users to scan through or search channel information or programs in order to select a program to access. Such search may include parameters comprising for example at least one of program category, ratings, compliance with viewer's preferences generally referred to as viewers profiles. Such a profile may for example comprise video, audio and preferred content type requirements.

Additionally, viewer television equipment is often capable of accessing the Internet network in order to receive additional content that may supplement typical user's television experience with live comments or scores, statistics, articles, highlights or short trailer videos.

Such a system is described in publication EP1099340A1 entitled "Television system with aided user program searching". The system provides an adaptive browse criteria settings display screen, which may be displayed when a user selects adaptive browse criteria setting option. Adaptive browse criteria settings display screen may include select algorithm option. Select algorithm option may provide an opportunity to select as the algorithm to be used in building a list of programs an algorithm based, for example, on: (a) current program attributes, (b) last-viewed program attributes, or (c) attributes determined using an adaptive learning algorithm. The user may use option to select one of these three types of algorithms. When the selected algorithm is set to current program attributes or last displayed program attributes, adaptive browse criteria settings display screen may include criteria settings display region. Criteria setting display region may include a list of program attribute criteria (e.g., genre, title, actor, channel, rating, scheduled duration, etc.) and adjustable importance settings (weights) associated with each criteria.

Therefore it is known from prior art that scheduled duration of the future programming is taken into account while searching for television content according to predefined user's preferences.

Another patent publication US7120922, entitled "Time-adaptive control of television viewing functionality", teaches that a problem with typical television receivers is that they are not very responsive to an individual user's demands. For example, in television systems that provide hundreds of services, locating desired television programs can require many keystrokes by the viewer and can consume significant amounts of time. Furthermore, different users may have different preferences regarding the information that may be presented via an electronic program guide (EPG), and these preferences may vary from time to time. Therefore, it should be appreciated that there is a need for improved systems and methods that address these and/or other problems associated with providing desirable television functionality.

In Fig. 8 of patent specification US7120922 depicts an example of a television channel type selection screen that may be presented to a user in response to the selection of the channel type option. In one embodiment, a channel type refers to a service that typically features only a certain type of service instance (e.g., sports or news channel) and/or that has a certain characteristic (e.g., broadcast channel). In an alternative embodiment, a channel type corresponds to a type of service instance active at a particular time period in a service, as identified by a "program type" field in a program's information in IPG database.

The aforementioned teachings do not provide a solution for a situation where a viewer wants to watch selected television content for a predefined time. Therefore it would be desirable to provide program guide for a system where time constraints do not only contain definition of when the user wishes to access television programming and which programming type it should be but also definition of for how long the viewer wishes to experience selected television programming.

According to the invention, a method for scheduling content items accessible to a receiver comprises the steps of receiving from at least one source information defining scheduled content items and unscheduled content items, receiving a request to generate a schedule comprising scheduled and unscheduled content items, receiving a start time and an end time for the schedule comprising scheduled and unscheduled content items, receiving at least one parameter defining content of the requested schedule, searching for the scheduled and unscheduled content items available for presentation between the start time and the end time, receiving search results and defining an output schedule comprising the scheduled and unscheduled content items available for presentation between the start time and the end time and matching the at least one parameter.

The method can further comprise a step of receiving additional parameters to be included in the searching step and/or a step of receiving information defining scheduled content items and information defining unscheduled content items from at least one source other than a broadcast data source and/or a step of arranging at least some of the content items of the output schedule in order to minimise the time unfilled with content items between the start time and the end time and/or a step of displaying the content items arranged in the arranging step and/or a step of scheduling recording of content item that has presentation time, according to the output schedule, other than the scheduled availability time.

Preferably, a plurality of arranged lists is defined.

The output schedule can include content items that may be recorded during the time starting from present time and the start time.

It is advantageous when the searching step outputs results of content items that may be displayed in their entirety between the start time and the end time and/or results of content items that end before or at the end time or end at a time in proximity to the end time.

Scheduled content items can be television programming events and unscheduled content items can be at least one of Internet content or pre-recorded content.

Preferably, in case a content item comprising textual data, the text is read out the output schedule comprises content items, which can be sequentially presented between the start time and the end time in a non-overlapping manner.

Additionally, the above-defined can comprise a step of receiving additional parameters from a viewer's profile to be included in the searching step.

Preferably, the receiver is switched on at the start time or at a time in proximity to the start time and is switched off or returns to stand-by mode of operation at the end time or at a time in proximity to the end time.

In addition, the idea of the invention is a computer program comprising program code means for performing all the steps of the method described above when said program is run on a computer.

Furthermore, the idea of the invention is a computer readable medium having computer-executable instructions performing all the steps of the computer-implemented method described above.

The idea of the invention is also a system for scheduling content items accessible to a receiver having a processor, at least one type of memory bi-directionally connected to the processor, a data receiving block, an A/V block for transmitting an output A/V signal, and external interfaces. The system further comprises a schedule parameters module for receiving and processing user's parameters input, a schedule search module for searching for scheduled and unscheduled content items in local and/or remote schedule databases using parameters defined by the schedule parameters module and a module for adjusting and presenting content items to a user.

In addition, the idea of the invention is a method for scheduling content items in a schedule server having a communication means operable to exchange data with a client device. This method comprises the steps of: receiving information defining scheduled content items, receiving information defining unscheduled content items, receiving from a client device a request to generate a schedule comprising scheduled and unscheduled content items, receiving a start time for the schedule comprising scheduled and unscheduled content items, receiving an end time for the schedule comprising scheduled and unscheduled content items, receiving at least one parameter defining content of the schedule comprising scheduled and unscheduled content items and corresponding to a viewer profile, searching for scheduled and unscheduled content items, available for presentation between the start time and the end time, receiving search results, defining an output schedule comprising scheduled and unscheduled content items for the time period between the start time and the end time, matching the at least one parameter and sending the output schedule to the client device.

The problem solved by the technical concept presented herein is scheduling for subsequent presentation of content items, received from various sources, in a time-limited viewing window. The time-limited viewing window is defined by the viewer and shall serve as a frame for scheduling presentation of content items according to viewer's needs. The content items, accessible to a decoder, may be both scheduled and unscheduled, which requires special adjustment and arrangement means as described in the following specification.

Furthermore, the concept presented herein is a television system that monitors a user's television viewing activity and suggests programs for the user to view in a time-limited viewing window as well as displays suggested program listings and supplementary listings from non-television sources that allows the user to browse the suggested listings. The presented television system can also display suggested program listings that include pre-recorded listings in case the viewer sets the time-limited viewing window in advance. During that time the viewer's television receiver may gather content to prepare a schedule for a viewer-defined time-limited viewing window. In addition, the presented television system can automatically power up when a programmed time-limited viewing window starts and switch to a stand-by mode when the scheduled time-limited viewing window ends.

Details and features of the system and method, its nature and various advantages will become more apparent from the accompanying drawing and the following detailed description of the preferred embodiments shown in a drawing, in which:
Fig. 1 is a diagram of an illustrative interactive television program guide system in accordance with the present concept;
Fig. 2 is a search screen presenting options for configuring scheduling for a time-limited viewing window;
Fig. 3 is a result of searching based on entry screen presented in Fig. 2;
Fig. 4 is viewer's profile screen;
Fig. 5 is a settings screen for recording of content for a future time-limited viewing window; and
Fig. 6 is an exemplary arrangement of content items, which requires content items recording.

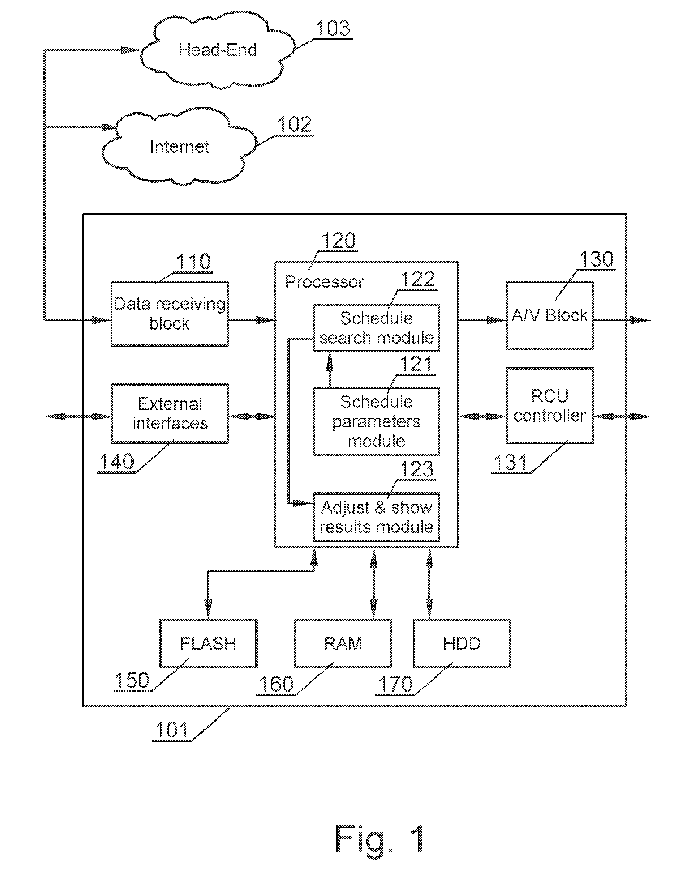

The decoder of digital television 101, for which the solution according to the presented technical concept may be applied, is divided into many functional modules, while its simplified version is shown in Fig. 1, as mentioned above, to avoid an overly complicated block diagram. It should be noted however, that the method may be applied in any device capable of television or audio/video content data reception and output of such data to a display, which may be internal or external.

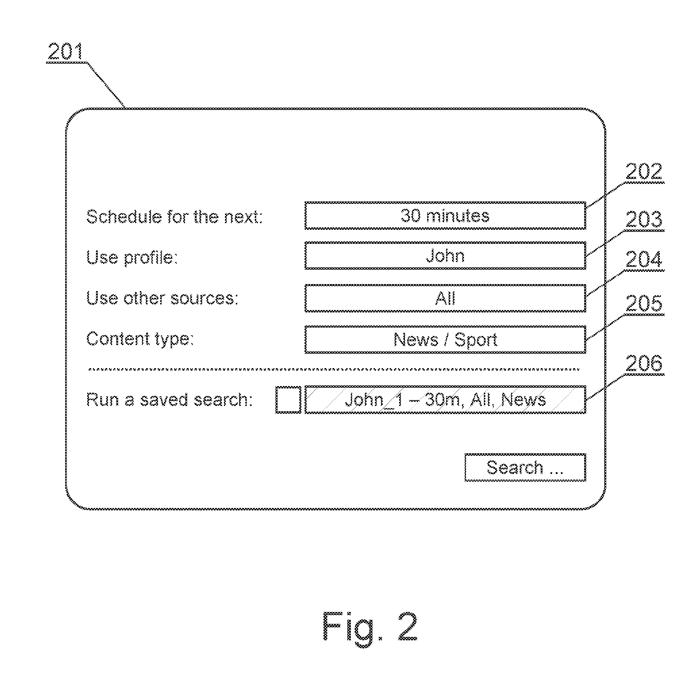

The most important module of the decoder 101 is a processor 120, which comprises a schedule parameters module 121 for receiving and processing user's parameters input for example according to options presented in Fig. 2. Additionally, according to the presented architecture of the system, the processor 120 includes a schedule search module 122 for searching for scheduled and unscheduled content items in local and/or remote schedule databases using parameters defined by the schedule parameters module 121. Additionally there is a module 123 for adjusting and showing the results on a display screen. The search results output by the schedule search module 122 may be adjusted taking into account parameters that cannot be send as a part of a search query used to obtain schedule programming. The adjusting or arranging step may take into account algorithms to aggregate results from various sources and to best fit the output results of the broadcast programming and fill the time gaps, if any, with content items the user will be also interested in. The adjusting or arranging may be related to at least some of the content items of the output results list in order to minimise the time unfilled with content items between the start time and the end time. The aggregation step may also be executed in the schedule search module 122.

In another example of embodiment, the blocks 121, 122 and 123 can be separate modules placed outside the processor 120.

There is a signal from a data receiving block 110, in the decoder 101, connected to the processor 120. Such data may comprise a television data stream received from a head-end facility 103, for example, an MPEG stream, which is hereby referenced for exemplary purposes only and therefore other audio/video data coding and transmission standards may by used. Some of the applications run on the decoder may be downloaded from the source signal received by the data reception block 110. Such applications may include software used to search for scheduling for a time-limited viewing window according to the presented concept. Other data may include content downloaded from the Internet 102 or a local computer network. A head-end may provide content by means of for example a cable, satellite, terrestrial or Internet protocol data communication link. The head-end facility 103 typically includes a program guide database for storing program guide information (e.g., television program listings data, program-related information, service listings data, service-related information, pay-per-view ordering information, television program promotional information, etc.).

Information defining scheduled content items and information defining unscheduled content items will typically be received from the head-end facility 103 and/or the Internet 102. The received information may also have a form of parameters used to access such information.

Certain program guide features, such as pay program purchasing, the purchasing of products or services, and data collection functions, may require that viewer's television decoder 101 transmit data to head-end 103 over communications paths. If desired, such data may be transmitted over telephone lines or other separate communications paths. Such features may include the search query transmission for scheduling for a time-limited viewing window according to the presented system and method.

The block A/V 130 and the remote control unit block 131 allow to transmit the output AN signal to a display and communicate with external control devices, for example a remote control unit.

Additionally the processor has a possibility of bi-directional exchange of data through external interfaces 140. Such interfaces are for example wireless network connections, external memories, home networking communication links.

The digital television decoder 101 comprises also several types of memory, which are bi-directionally connected to the processor 120. These are the non-volatile memory (for example, of FLASH type 150) and operational RAM memory 160. There are programs, for controlling the operation of the digital television decoder 101, stored in these memories. The Hard Disk memory 170 is typically utilized as a storage space for viewer's digital television recordings.

One or more programmed software applications, herein referred to as applications, are executed by utilizing the computing resources in the decoder 101. Applications stored in flash memory 150 or RAM 160 are executed by the processor 120. Data, for example programming schedule information, required as input by an application is stored in HDD 170, RAM 160 or flash memory 150 and read by processor 120 as needed during the course of the application's execution. An application referred to as program guide is also resident in decoder's memories. Additionally applications may store downloaded data or output data, for example data defining viewers profiles, which can be used to define time-limited viewing window schedules.

Fig. 2 presents an exemplary search screen 201 presenting options for configuring scheduling for a time-limited viewing window. The duration of the time-limited viewing window can be chosen using the parameter 'Schedule for the next' 202. The user may enter time in minutes or choose the duration from a list, for example having entries with 15 minute increments. As presented, in the parameter 202, the duration of the time-limited viewing window has been set to 30 minutes.

The next option, 'Use profile' 203, defines whether the viewer wishes to include viewer's profile data in the search. The parameter may have a form of a drop down list comprising profiles of viewers registered on this particular decoder of digital television 101. As presented, in the parameter 203, the profile named 'John' has been selected. Thus the system will include viewing habits of the viewer 'John' in order to select results for the time-limited viewing window.

Another parameter, that may be applied in the present system, is 'Use other sources' 204, which defines whether the decoder 101 shall limit the search to selected type or types of source data. For example the search may be limited to broadcast programming or broadcast programming plus video on demand programming, or video on demand programming plus locally recorded content. Other combinations of sources may include Internet content or data available via home networking or available from external storage media such as audio or video players. If the viewer chooses content sources other than broadcast content, the proposed schedule will be more precise and there will be less gaps to fill between the programming. The gaps may for example be filled with Internet content, which may last for a shorter period of time than a typical broadcast programming. The Internet content may include short news, event summaries, videos posted on blogs by community members or articles that may be presented for the viewer to read or may be read aloud by a software application executed by the decoder 101. The scheduled time of reading may be estimated in the latter case. As presented in the parameter 204, all available data sources will be scanned in the shown example.

The next option that may be available to a viewer is 'Content type' 205. It allows for defining a kind of content category the viewer wishes to include in the scheduled search results. The kinds of programming may include Sport, News, Top Movies, Comedy, Drama, TV series etc. As presented in the parameter 205, only News and Sport programming content will be searched for in the shown example.

In another embodiment the viewer may be presented with an option to 'Run a saved search' 206. When the viewer wishes to use this feature, its activating checkbox can be selected and a saved search can be chosen from the list. This allows speeding up the process of setting up the time-limited viewing window. Searches may be saved manually by the viewer or all searches history may be automatically saved, for example in the decoder's non-volatile flash memory 150, by the scheduling application. As presented, in the parameter 206, the selected saved search John_1 includes News content for the next 30 minutes from all available sources.

Using the parameters input screen of Fig. 2, the decoder 101 executes a routine, which is based on information defining scheduled content items and information defining unscheduled content items. The aforementioned are sources of information that will be searched for content items.

The information defining scheduled content items will typically be created and stored on the head-end facility 103. Later this information is broadcast by television operators in a form of Service Information (SI) containing Event Information Tables (EIT) defining scheduled events in terms of for example channel, start and end time, category, parental rating and the like. However, it is to be understood that other systems than SI and EIT information may be applied.

The information defining unscheduled content items will relate for example to parameters of data sources or parameters of particular content or sources of content available on the Internet or video on demand libraries. In case of audio/video clip from the Internet such information will for example comprise coding type, author, duration and the like. In case of newspaper articles, available on a website, it can be estimated how long it would take to read the article based for example on a word count. The word count is in this case indirect information defining the unscheduled content item of the published article.

The routine, executed by the decoder 101, takes into account the start time of the requested schedule and typically the end time of the requested schedule. The end time may be alternatively given in the form of duration from the start time and therefore indirectly define the end time. It can be similarly done with the start time by providing a duration of a time period preceding the end time to indirectly define the start time. Alternatively if the start time is not directly given by the viewer, it can be indirectly received by reading current system clock of the decoder 101 or a search engine server. Therefore the decoder 101 may indirectly receive a start time while not providing it as a direct parameter. The decoder 101 or the search engine shall recognise whether the start and/or the end time of the requested schedule are received directly or indirectly. All of these actions fall under the term of receiving a time parameter.

When the parameters are given the searching for scheduled and unscheduled content items available for displaying between the start time and the end time is performed and the results of the search are obtained.

Alternatively, the functionality of the searching can be implemented outside the decoder 101, for example within a remote server like the head-end facility 103. Then, the communication between the search engine server and the viewer's decoder 101 is implemented using a suitable network communication protocol. Data can be exchanged using either of the communication interfaces 102, 103, 140 or any other suitable data exchange mechanisms. Therefore performing the searching also means sending a searching request to one or more remote search engines and obtaining results from these search engines.

The next important step is defining an output schedule, comprising scheduled and unscheduled content items, for the predefined time period between the start time and the end time. The output schedule may be defined in such a manner that a content item A will be presented starting from 10^{th} minute and ending at 35^{th} minute and a content item B will be presented starting from 34^{th} minute and ending at 55^{th} minute. During the overlapping time period both signals may be presented on a display with the user having the possibility of switching between the audio signals of content items A and B. Such insignificant overlapping of content items may help to better fit the output schedule within the time-limited viewing window and still allow viewing both content items in their entirety. The user of the decoder 101 may set appropriate option in a user's profile to define whether insignificant overlapping is allowed when defining an output schedule.

Other parameters 203, 204, 205, 502, 503, 508, or 509, of the search, may also be applied by the viewer.

Using the parameters applied, the search will output results of content items that end before or at the end time or end at a time in proximity to the end time.

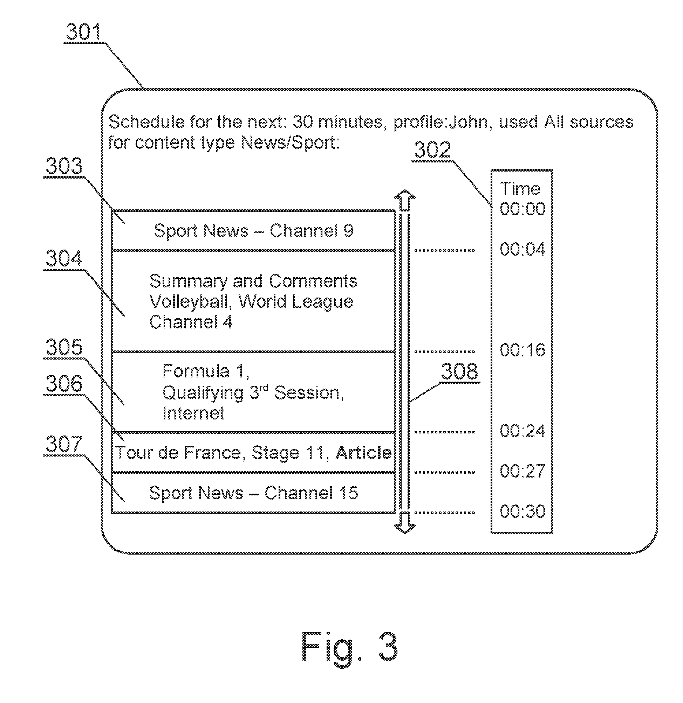

Fig. 3 presents an exemplary search results screen 301 presenting found and arranged content according to parameters set using the setup screen of Fig. 2 defining options for configuring scheduling for a time-limited viewing window.

The screen 301 presents results as a list in reference to a time axis 302. For the parameters of Fig. 2 the time axis spans from 00:00 minutes to 00:30 minutes as requested by the viewer. If the schedule list is longer or the descriptions of content items require more screen space, the schedule may be scrolled using a provided scroll bar 308. The scroll bar 308 and the remaining graphical user interface components may be operated with a remote control unit.

The results include five content items 303 - 307. It is preferred that the content items are presented in their entirety within the time provided. Item 303 is a broadcast event of Sport News on channel 9. This is a scheduled event that is being broadcast now. In this particular case when the event 303 ends, on different channel, another event 304 will be broadcast, namely, a summary and comments on volleyball world league on channel 4. Since the system could not find any broadcast programming suitable to fill the remaining time, supplementary content from the Internet has been found. Namely, the 'Formula 1 Qualifying 3^{rd} Session' 305 together with an item 306 about 'Tour de France, Stage 11' has been used to fill the time gap between broadcast content 304 and 307. The article 306, which is a content item comprising textual data, may be read out loud by reading software of the decoder 101. The duration time of the reading may be estimated beforehand to best fit the found content within the time-limited viewing window. Best fit means that there will be none of very limited time space unfilled with content items in the time-limited viewing window. Optionally the viewer may be given time to read the article. The scheduled 30-minute time ends with a broadcast programming event of 'Sport News' 307 available on channel 15.

In another embodiment there may be a plurality of search result screens available for review and acceptance by the viewer. Different arrangements of content items may be provided at the viewers option.

When the user accepts scheduled content items they may be played or played and recorded, in the selected order, forming one recorded event or a set of linked content items later played back according to the order of the schedule.

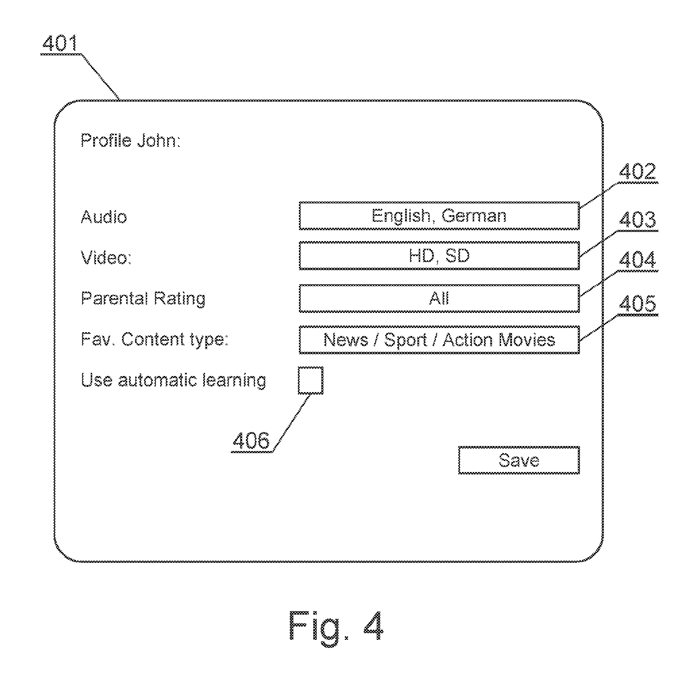

Fig. 4 presents an exemplary viewer's profile, which may be used to provide further parameters for scheduling a time-limited viewing window. In this example the profile of the user John is displayed on the screen 401. The profile presented in this embodiment lists five options 402 - 406, however it is to be understood that various other options may be applied according to viewer's preferences.

Exemplary options include preferred language of audio tracks 402. In this case the profile defines that the viewer in prefers programming in English and then in German to other languages. Similarly the viewer prefers high definition video (HD) to standard definition video content (SD) as defined by the parameter 403. Another option defined in a user's profile may be parental level rating 404. In the presented case all content types are allowed for selected viewer. The last option of the profile, according to this embodiment, is favourite content type 405. Any kind(s) of content can be defined. In this example the user likes most news, sport and action movies.

Another feature, the user profile system may have, is the ability to monitor viewer's actions and define viewer's profile options based on history 406 of viewer's watched and recorded programming and frequently selected options.

Viewer's profile data may be stored by the decoder's 101 software, for example, in the decoder's non-volatile flash memory 150 or the HDD 170, by the electronic program guide application.

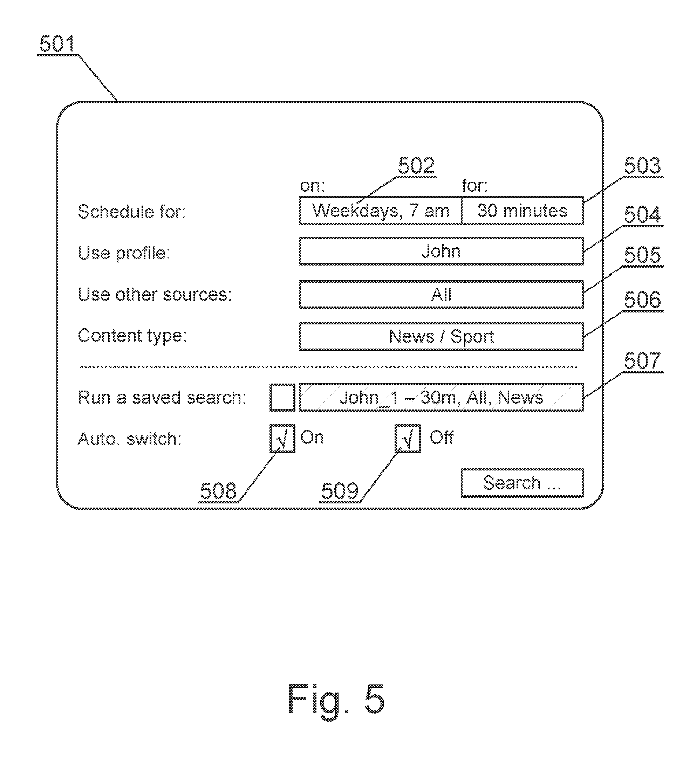

Fig. 5 presents a settings screen for recording of content for a future time-limited viewing window. In this embodiment the schedule search options screen shown in Fig. 2 has been further enhanced by addition of four options fields 502, 503, 508 and 509. Options 504 - 507 correspond to 203 - 206 shown in Fig. 2. Since this screen configures a future time-limited viewing window, the option 502 provides a starting time definition and the option 503 defines duration. The starting time may be defined as weekdays at 7 am and in such a case the decoder 101 will have almost 24 hours to find content and generate best schedule for the incoming day.

The options of automatically switching on 508 and off 509 the decoder 101 may be set separately. In case when a display is external to the decoding receiver device it would have to be programmed separately.

The content is recorded and played back at a specified time. This function is for example useful for viewers who would like, for example, to watch news highlights of the previous day before they go to sleep or before leaving for work. Seeing that the system returns to stand-by mode viewers would also be aware of the time and be notified that they should leave for example for work. The time-limited window scheduling equipped with this option is very useful to television viewers.

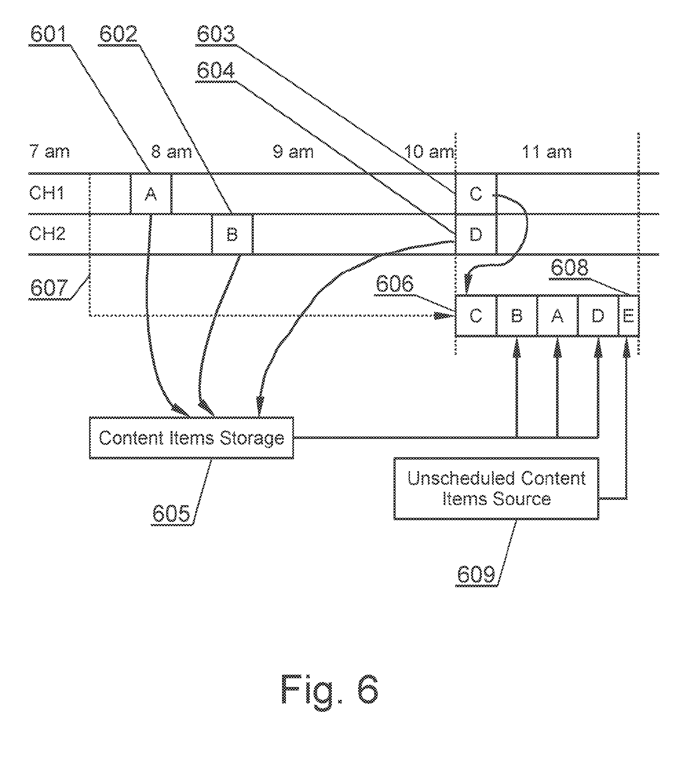

Fig. 6 is an exemplary arrangement of content items, which requires content items recording. In this case a viewer has setup a time-limited viewing window 606 from 10:15 to 12:00. This setup has been created 607 at 7:30.

Because of this arrangement the content items which can be sequentially presented between the viewer-selected start time and the end time include content items that may be recorded during the time starting from present time and the start time. Therefore the method described herein may further comprise a step of scheduling recording of content item that has presentation time, according to the list, other than the scheduled availability time.

The search described with reference to previous figures returns the list of results, which can be arranged in the time-limited viewing window 606. These content items are available on CH1 and CH2 channels. The content items A 601 and B 602 have to be recorded since these are scheduled content items and there is no future alternative time of their availability. A and B will typically be recorded on a computer readable content items storage 605. This may for example be the hard drive 170 of the decoder 101 or an external storage including a remote server. When the scheduled content items A 601 and B 602 have been recorder they will become unscheduled content items available at any time from the content items storage 605.

The time-limited viewing window 606 starts at a time when content items C 603 and D 604 are scheduled. This means that either C or D has to be recorded while the other one will be recorded. In this example D is recorded and C is presented live. Hence the viewer receives a schedule for the time-limited viewing window 606 where content items are presented in a sequence of C, B, A and finally D. Content item E 608, received from an unscheduled content items source 609, is an unscheduled content item fitted after the scheduled A-D content items. Content item E 608 may be, for example, an Internet newspaper article.

It should be appreciated that the selected content items are presented between the start time and the end time of the time-limited viewing window 606 in a non-overlapping manner.

In another embodiment the functions, described earlier with reference to a receiver, may be implemented within software or hardware of a remote scheduling server. Such a server may be a part of the head-end facility 103.

While the technical concept presented herein has been depicted, described, and has been defined with reference to particular preferred embodiments, such references and examples of implementation in the foregoing specification do not imply any limitation on the concept. It will, however, be evident that various modifications and changes may be made thereto without departing from the broader scope of the technical concept. The presented preferred embodiments are exemplary only, and are not exhaustive of the scope of the technical concept presented herein. Accordingly, the scope of protection is not limited to the preferred embodiments described in the specification, but is only limited by the claims that follow.

## Claims

1. A method for scheduling content items accessible to a receiver, the method comprising the steps of:
receiving from at least one source information defining scheduled content items and unscheduled content items;
receiving a request to generate a schedule comprising scheduled and unscheduled content items;
receiving a start time and an end time for the schedule comprising scheduled and unscheduled content items;
receiving at least one parameter defining content of the requested schedule; searching for the scheduled and unscheduled content items available for presentation between the start time and the end time;
receiving search results; and
defining an output schedule, comprising the scheduled and unscheduled content items available for presentation between the start time and the end time, matching the at least one parameter.

2. The method, according to claim 1, **characterised in that** it further comprises a step of receiving additional parameters to be included in the searching step.

3. The method, according to claim 1, **characterised in that** it further comprises a step of receiving information defining scheduled content items and information defining unscheduled content items from at least one source other than a broadcast data source.

4. The method, according to claim 1, **characterised in that** it further comprises a step of arranging at least some of the content items of the output schedule in order to minimise the time unfilled with content items between the start time and the end time.

5. The method, according to claim 4, **characterised in that** a plurality of arranged lists is defined.

6. The method, according to claim 4, **characterised in that** it further comprises a step of displaying the content items arranged in the arranging step.

7. The method, according to claim 1, **characterised in that** the output schedule includes content items that may be recorded during the time starting from present time and the start time.

8. The method, according to claim 1, **characterised in that** it further comprises a step of scheduling recording of content item that has presentation time, according to the output schedule, other than the scheduled availability time.

9. The method, according to claim 1, **characterised in that** the searching step outputs results of content items that may be displayed in their entirety between the start time and the end time.

10. The method, according to claim 1, **characterised in that** the searching step outputs results of content items that end before or at the end time or end at a time in proximity to the end time.

11. The method, according to claim 1, **characterised in that** scheduled content items are television programming events.

12. The method, according to claim 1, **characterised in that** unscheduled content items are at least one of Internet content or pre-recorded content.

13. The method, according to claim 1, **characterised in that** in case a content item comprising textual data, the text is read out loud by the receiver.

14. The method, according to claim 1, **characterised in that** the output schedule comprises content items, which can be sequentially presented between the start time and the end time in a non-overlapping manner.

15. The method, according to claim 1, **characterised in that** it further comprises a step of receiving additional parameters from a viewer's profile to be included in the searching step.

16. The method, according to claim 1, **characterised in that** the receiver is switched on at the start time or at a time in proximity to the start time.

17. The method, according to claim 1, **characterised in that** the receiver is switched off or returns to stand-by mode of operation at the end time or at a time in proximity to the end time.

18. A computer program comprising program code means for performing all the steps of a method as claimed in any of claims 1 to 20 when said program is run on a computer.

19. A computer readable medium having computer-executable instructions performing all the steps of the computer-implemented method according to any of claims 1 to 20.

20. A system for scheduling content items accessible to a receiver having a processor (120), at least one type of memory (150, 160, 170) bi-directionally connected to the processor (120), a data receiving block (110), an A/V block (130) for transmitting an output A/V signal, and external interfaces (140) **characterised in that** the system further comprises a schedule parameters module (121) for receiving and processing user's parameters input, a schedule search module (122) for searching for scheduled and unscheduled content items in local and/or remote schedule databases using parameters defined by the schedule parameters module (121) and a module (123) for adjusting and presenting content items to a user.

21. A method for scheduling content items in a schedule server having a communication means operable to exchange data with a client device, the method comprising the steps of:
receiving information defining scheduled content items;
receiving information defining unscheduled content items;
receiving from a client device a request to generate a schedule comprising scheduled and unscheduled content items;
receiving a start time for the schedule comprising scheduled and unscheduled content items;
receiving an end time for the schedule comprising scheduled and unscheduled content items;
receiving at least one parameter defining content of the schedule comprising scheduled and unscheduled content items;
searching for scheduled and unscheduled content items, available for presentation between the start time and the end time;
receiving search results;
defining an output schedule, comprising scheduled and unscheduled content items, for the time period between the start time and the end time, matching the at least one parameter; and
sending the output schedule to the client device.
